# EUROPÄISCHE PATENTSCHRIFT

(11) **EP 0 903 953 B1**
(45) Veröffentlichungstag und Bekanntmachung des Hinweises auf die Patenterteilung: **16.03.2005**
(21) Anmeldenummer: 98117226.5
(22) Anmeldetag: 11.09.1998
(51) Int. Cl.: H04Q 9/00, G08C 17/02, G01F 15/06

(54) **Verfahren zum zentralen Erfassen von an örtlich verteilten Datenstellen anliegenden Verbrauchsdaten in Gebäuden, insbesondere für Heizung und Warmwasser**
Method for the central reading of utility meter data attached to locally distributed data sites in buildings, particularly for heating and hot water
Procédé de lecture centrale de données de consommation attachées à des sites de données distribués dans des immeubles, en particulier pour chauffage et eau chaude

(30) Priorität: 18.09.1997 DE 19741085
(43) Veröffentlichungstag der Anmeldung: 24.03.1999
(73) Patentinhaber: KUNDO SYSTEMTECHNIK GmbH, 78112 St. Georgen (DE)
(72) Erfinder: Pfeiffer, Ulrich Dipl.-Ing., 78112 St. Georgen (DE)
(74) Vertreter: Goy, Wolfgang, Dipl.-Phys.

(56) Entgegenhaltungen:
- DE-A- 19 706 613
- US-A- 4 940 976
- US-A- 5 719 564
- US-A- 6 073 169

## Beschreibung

Die Erfindung betrifft ein Verfahren zum zentralen Erfassen von an örtlich verteilten Datenstellen anliegenden Verbrauchsdaten in Gebäuden, insbesondere für Heizung und Warmwasser, wobei eine Zentralstelle die Daten von der jeweiligen Datenstelle per Funk abruft und speichert. - Die Erfindung betrifft ferner eine Vorrichtung zur Durchführung des Verfahrens mit einer zentralen Sende- und Empfangseinheit der Zentralstelle mit einer bidirektionalen Sende- und Empfangsschaltung sowie mit den Datenstellen zugeordneten Sendeund Empfangseinheiten ebenfalls mit bidirektionalen Sende- und Empfangsschaltungen.

Ausgangspunkt der Erfindung ist ein Datenabruf- sowie Übertragungssystem, nämlich allgemein alle Datenübertragungen von Meßgeräten oder anderen Systemen zu einem Datensammler in Form eines Zentralsystems bzw. einer Funkzentrale - siehe US-A-4 940 946. Erfindungsgemäßes Anwendungsgebiet dieses Datenabruf- und Übertragungssystems sind Hauszentralen für die Verbrauchsdatenerfassung, Industriegebäude für die Verbrauchsdatenerfassung, Überwachung von verschiedenen Meßwerten, Datenübertragungen von verschiedenen Orten an einen zentralen Punkt, Datenabrufe von Meßgeräten über Modem und andere Femanschlußsysteme sowie Momentankonstrollen von verschiedenen Meßgeräten.

Das Hauptanwendungsgebiet ist - neben den anderen, zuvor genannten Anwendungsmöglichkeiten - insbesondere die Datenabfrage, Datenspeicherung sowie Datenübertragung mittels eines Funksystems zur zentralen, verbrauchsabhängigen Datenerfassung der Kosten für Heizung und Warmwasser. Das bekannte Verfahren sieht dabei Meßdatenstellen beispielsweise an Heizkörpern vor, welche über Funk mit einer Zentrale verbunden sind. Dabei sind die Funkzentrale sowie alle Meßgeräte mit einer bidirektionalen Sende- und Empfangsschaltung ausgestattet. Das Ablesen per Funk der einzelnen Meßgeräte stellt eine problemlose, zeitsparende sowie präzise Übertragungsmöglichkeit der dezentralen Verbrauchsdaten auf ein zentrales Erfassungssystem dar ohne aufwendige und teure Verkabetung. Dieses Verbrauchsdatenerfassungssystem schließt vor allem mögliche menschliche Ablese- und Eingabefehler aus. Wohnungen müssen nicht betreten werden, und damit sind Terminabsprachen mit den Bewohnern nicht notwendig.

Neben den genannten Vorteilen hat das erfindungsgemäße Erfassungssystem für die gewünschten Daten auch kleinere Mängel und Nachteile. So benötigt man beispielsweise in der Funkzentrale einen sehr hohen, signaleingangsempfindlichen Empfänger, welcher dadurch verhältnismäßig teuer ist. Oder man benötigt alternativ Sender mit sehr hoher Sendeleistung, was bei Batteriegeräten wegen der Lebensdauer und dem Strombedarf nicht immer möglich ist. Deshalb ist man gezwungen, mehrere Empfänger oder Antennen zu installieren, welche direkt mit der Funkzentrale verbunden sind. Dies führt aber zu einem erhöhten Montage- und Installationsaufwand. Die Investition eines weiteren Empfängers wird aber von den Anwendern oft nicht akzeptiert, wenn Meßgeräte außerhalb des Empfangsbereiches liegen. Weiterhin ist eine vollständige Ausmessung von Anlagen oder Gebäuden meist unmöglich oder wirtschaftlich nicht mehr vertretbar. Grundsätzlich müßten aber die Gebäude hinsichtlich ihrer Empfangsmöglichkeiten ausgemessen werden. Oft führen nämlich bauliche Gegebenheiten zu Empfangseinschränkungen, wenn durch diese bauliche Gegebenheiten die Sendedaten verschiedener Meßgeräte nicht zur Zentrale gelangen können.

Davon ausgehend liegt der Erfindung die **Aufgabe** zugrunde, sämtliche Datenstellen auch dann sicher von der Zentralstelle erfassen zu können, wenn sie außerhalb des Empfangsbereiches des Empfängers der Zentralstelle sind oder wenn durch bauliche Gegebenheiten die Sendedaten verschiedener Datenstellen nicht zur Zentralstelle gelangen können.

Als technische **Lösung** wird mit der Erfindung verfahrensmäßig vorgeschlagen, daß bei Nichterreichen einer bestimmten Datenstelle durch die Zentralstelle diese Zentralstelle eine erreichbare Datenstelle oder eine anderweitige, erreichbare Brückenstelle anfunkt und daß diese erreichbare Datenstelle oder Brückenstelle daraufhin die anfänglich nicht erreichbare Datenstelle unmittelbar oder mittelbar anfunkt und bei Erreichen die Daten per Funk abruft und an die Zentralstelle weitersendet.

Dadurch ist ein Datenabruf- und Übertragungssystem geschaffen, welches keine Empfangseinschränkungen durch bauliche Gegebenheiten oder durch zu weit entfernt liegende Datenstellen zur Zentralstelle aufweist. So müssen die Gebäude hinsichtlich ihrer Empfangsmöglichkeiten nicht mehr ausgemessen werden. Die erfindungsgemäße Grundidee besteht dabei darin, daß die im Empfangsbereich der Zentralstelle liegenden Datenstellen dazu benutzt und beauftragt werden, die nicht empfangenen Datenstellen anzusprechen und deren Daten abzurufen und an die Zentralstelle weiterzuleiten. So ruft die Zentralstelle die entsprechenden, erreichbaren Datenstellen mittels ihrer Identifikationsnummer auf, ihre Daten an die Zentralstelle zu senden. Meldet sich eine oder mehrere Datenstellen nicht, so werden die empfangenen Datenstellen aufgefordert, die nicht empfangenen Datenstellen anzusprechen und ihre Daten über die so zwischengeschaltete Datenstelle an die Zentralstelle weiterzusenden. Sofern die von der Zentralstelle angesteuerten Datenstellen die gewünschte Datenstelle immer noch nicht erreichen, so müssen - wie noch näher auszuführen sein wird - weitere Datenübertragungsstellen zwischengeschaltet werden. Darunter wird dann eine mittelbare Datenübertragung verstanden. Sofern die von der Zentralstelle direkt angefunkte Datenstelle gleich die Verbindung zu der gewünschten Datenstelle herstellen kann, wird darunter eine unmittelbare Datenübertragung verstanden. Ist eine Datenstelle außerhalb des Empfangsbereiches der nächst an ihr liegenden Datenstelle, so kann man diese Strecke mit einer Zwischenstelle in Form einer Blinddatenstelle funktechnisch überbrücken, so daß auch für diesen Fall die Datenübertragung möglich ist. Es handelt sich somit bei dieser Zwischenstelle um eine neutrale Einheit, welche nur dem Datentransfer dient und an der selbst keine Meßdaten anliegen. Dieser reine Datenübertrager wird also dann eingesetzt, um ein außerhalb des Empfangsbereiches eines bestimmten Meßgerätes liegendes weiteres Meßgerät trotzdem noch empfangen zu können.

Eine Weiterbildung des erfindungsgemäßen Verfahrens schlägt vor, daß bei erneutem Nichterreichen der anfänglich nicht erreichten Datenstelle von den durch die Zentralstelle erreichbaren Datenstellen oder Brückenstellen kaskadenartig weitere erreichbare Datenstellen oder Brückenstellen angefunkt werden bis die Verbindung zu der anfänglich nicht erreichten Datenstelle hergestellt ist und daß ausgehend von der anfänglich nicht erreichten Datenstelle die an die Zentralstelle zu übertragenden Daten auf dem umgekehrten Verbindungsweg von Datenstelle/Brückenstelle zu Datenstelle/Brückenstelle weitergesendet werden. Diese Weiterschaltung bzw. Zwischenabfragung von entsprechenden Datenstellen kann kaskadenweise beliebig oft erweitert werden. Beispielsweise kann eine Datenstelle von der Zentralstelle die Aufforderung bekommen, eine bestimmte Datenstelle anzurufen. Ruft nun diese Datenstelle die gewünschte Datenstelle auf und diese meldet sich nicht, so kann die vorliegende Datenstelle die Aufforderung an andere Datenstellen weitergeben. Dadurch kann eine beliebig lange Kette aufgebaut werden, die nur zeitlich eine Begrenzung findet. Das System sucht sich somit selbständig den richtigen Weg zum Ziel, nämlich zu der zunächst nicht erreichten Datenstelle, welche ihre Daten an die Zentralstelle senden soll. Durch die Besonderheit, daß alle Datenstellen, welche die Aufforderung hören, den Sendebefehl an die gewünschte Datenstelle weitergeben, ist es auch nicht notwendig, in der Zentralstelle einen Lageplan abzulegen, d.h. die Zentralstelle muß nicht wissen, wo die Datenstellen installiert sind, da alle empfangenen Datenstellen quasi gleichzeitig nach den nicht empfangenen Datenstellen "rufen bzw. suchen". Dieses System wirkt durch diese Weiterbildung wie ein Schneeballeffekt, d.h. die Zentralstelle als Punkt ruft die Datenstellen auf und alle im Empfangskreis der Zentralstelle liegenden Datenstellen werden empfangen. Die nicht empfangenen Datenstellen werden durch die empfangenen Datenstellen in ihren jeweiligen Empfangskreisen gesucht und empfangen. Die hier nicht empfangenen Datenstellen werden nun von den neu empfangenen Datenstellen entsprechend aufgefordert, ihre Daten im zusätzlich geschaffenen Empfangskreis zu senden.

Eine weitere Weiterbildung des erfindungsgemäßen Verfahrens schlägt vor, daß sämtliche erreichbaren Datenstellen oder Brückenstelle der Reihe nach angefunkt werden bis eine Verbindung zu der anfänglich nicht erreichten Datenstelle hergestellt ist. Dadurch ist gewährleistet, daß sämtliche Möglichkeiten ausgeschöpft werden, um die Verbindung zu einer gewünschten Datenstelle herzustellen.

Eine weitere Weiterbildung schlägt vor, daß die Daten von der Datenstelle oder Brückenstelle zunächst zwischengespeichert und anschließend weitergesendet werden. Selbstverständlich ist es alternativ auch denkbar, die Daten nicht zwischenzuspeichern, sondern sie direkt weiterzusenden.

Eine weitere Weiterbildung schlägt vor, daß unterschiedliche Sendestartzeiten der einzelnen Datenstellen aus einem vorgegebenen Algorithmus und einer Datenstellenidentifikation in jeder Datenstelle für sich berechnet wird. Dadurch werden Überschneidungen beim Senden der entsprechenden Datenstellen verhindert.

Als Alternative wird vorgeschlagen, daß die Zentralstelle die Daten aus den einzelnen Datenstellen zeitverzögert anfordert. Dies wird durch eine zeitverzögerte Datenanforderung der Zentrale im Protokoll als Definition bzw. Zeitfaktor als Wartezeit ermöglicht.

Als technische **Lösung** wird mit der Erfindung vorrichtungsmäßig vorgeschlagen, daß die Sende- und Empfangseinheiten der Datenstellen untereinander sende- und empfangsfähig sind.

Dadurch wird die Möglichkeit geschaffen, daß die Datenstellen nicht nur mit der Zentralstelle über Funk kommunizieren können, sondern daß die Datenstellen direkt miteinander kommunizieren und in der Art einer Kette oder Kaskade Daten empfangen und weitersenden können.

Schließlich wird in einer Weiterbildung der Vorrichtung vorgeschlagen, daß zusätzlich zu den Empfangs- und Sendeeinheiten der Datenstellen Brücken-Empfangs/Sendeeinheiten für einen reinen Datentransfer vorgesehen sind. Ist somit einmal eine Datenstelle außerhalb des Empfangsbereiches der nächst an ihr liegenden Datenstelle, so kann man diese Strekke mit einem Blindgerät funktechnisch halbieren und auf diese Weise eine Datenübertragung dennoch ermöglichen.

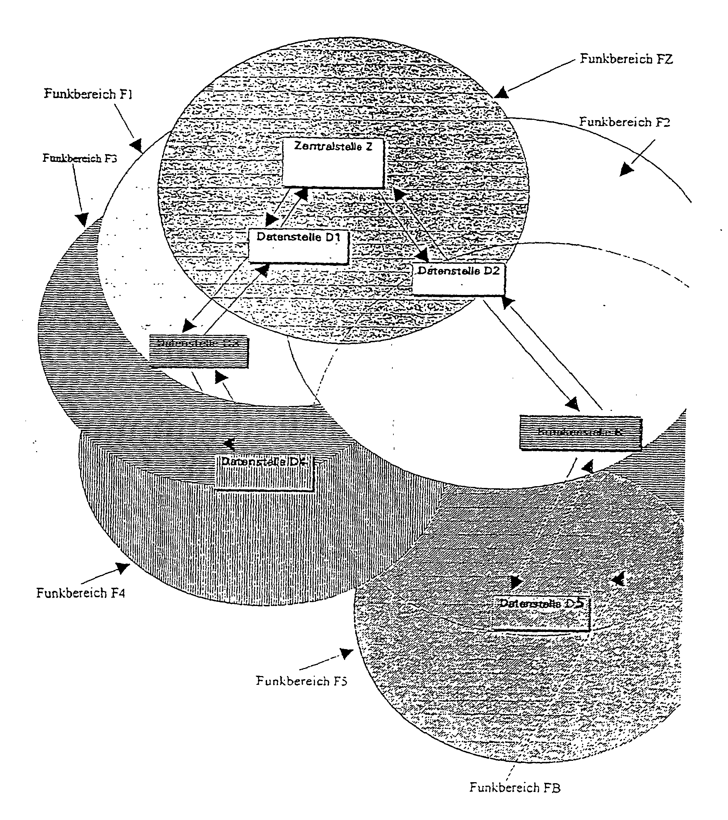

Ein Ausführungsbeispiel der Erfindung wird nachfolgend anhand der Zeichnung beschrieben. In dieser ist in rein perspektivisch-schematischer Weise das erfindungsgemäße Verfahren zum zentralen Erfassen von an örtlich verteilten Datenstellen anliegenden Daten dargestellt.

Zunächst ist eine Zentralstelle Z in schematischer Weise angedeutet. Es handelt sich bei dieser Zentralstelle Z um eine zentrale Sende- und Empfangseinheit mit einer bidirektionalen Sende- und Empfangsschaltung. Diese Zentralstelle Z soll zentral irgendwelche externen Meßdaten erfassen. Der Funkbereich FZ der Zentralstelle Z ist durch einen Kreis angedeutet. Dieser Funkbereich FZ ist die Sende- und Empfangsreichweite der Zentralstelle Z.

Weiterhin sind fünf Datenstellen D1 bis D5 angedeutet. Bei diesen Datenstellen D1 bis D5 kann es sich beispielsweise um Meßgeräte handeln, welche Daten messen, die dann der Zentralstelle Z übertragen werden sollen. Die Funkbereiche F1 bis F5 der Datenstellen D1 bis D5 sind gleichermaßen wie der Funkbereich FZ der Zentralstelle Z durch Kreise angedeutet. Den Datenstellen D1 bis D5 ist ebenso wie bei der Zentralstelle Z jeweils eine Sende- und Empfangseinheit mit einer bidirektionalen Sende- und Empfangsschaltung zugeordnet.

Schließlich ist noch eine Brückenstelle B mit ihrem Funkbereich FB angedeutet. Diese Brückenstelle B weist lediglich eine funktechnische Sende- und Empfangseinheit auf, zeugt selbst aber keine Daten wie die Datenstellen D1 bis D5.

Die Funktionsweise des Datenabruf- und Übertragungssystems ist wie folgt:

Zunächst sollen die Daten der Datenstelle D1 der Zentralstelle Z übertragen werden. Die Zentralstelle Z ruft die Datenstelle D1 mittels ihrer Identifikationsnummer auf, ihre Daten an die Zentralstelle Z zu senden. Da die Datenstelle D1 im Funkbereich FZ der Zentralstelle Z liegt, kann die Datenstelle D1 direkt ihre Daten der Zentralstelle Z senden.

Da auch die Datenstelle D2 im Funkbereich FZ der Zentralstelle Z liegt, ist auch dort auf entsprechende Weise ein Abruf der in der Datenstelle D2 vorliegenden Daten möglich.

Anders sieht es mit den zu übertragenden Daten der Datenstelle D3 aus. Der Empfänger der Datenstelle D3 liegt außerhalb des Funkbereiches FZ der Zentralstelle Z, so daß die Datenstelle D3 nicht auf den Aufruf der Zentralstelle Z reagieren wird. Die Datenstelle D3 wird sich somit bei der Zentralstelle Z nicht melden. In diesem Fall werden die empfangenen Datenstellen D1 und D2 aufgefordert, die nicht empfangene Datenstelle D3 anzusprechen und ihre Daten zu senden. Die Datenstelle D3 liegt zwar außerhalb der Funkbereichs F2 der Datenstelle D2, jedoch innerhalb des Funkbereichs F1 der Datenstelle D1. Die Datenstelle D3 wird somit auf den entsprechenden Aufruf der Datenstelle D1 reagieren und zunächst die Daten der Datenstelle D1 senden. Die Datenstelle D1 zwischenspeichert die Daten und sendet sie schließlich an die Zentralstelle Z weiter.

Bei der Übertragung der Daten der Datenstelle D4 an die Zentralstelle Z ist der Weg noch weiter. Da die Datenstelle D4 sowohl außerhalb des Funkbereichs FZ der Zentralstelle Z als auch außerhalb des Funkbereichs F1 der Datenstelle D1 liegt, wird die Datenstelle D4 auf den Aufruf der zusätzlich von der Zentralstelle Z eingeschalteten Datenstelle D1 nicht reagieren. Deshalb wird die Datenstelle D1 sämtliche in ihrem Funkbereich F1 liegenden Datenstellen aufrufen und diese auffordern, den Kontakt zu der Datenstelle D4 herzustellen. Dies wird die Datenstelle D3 sein. Da die Datenstelle D4 im Funkbereich F3 der Datenstelle D3 liegt, kann die Datenstelle D3 wiederum die Datenstelle D4 aufrufen, so daß die Datenstelle D4 über die Datenstelle D3 und D1 die Daten an die Zentralstelle Z überträgt.

Während bisher die Datenstellen D1 bis D4 in ihren gegenseitigen Funkbereichen F1 bis F4 liegen, liegt die Datenstelle D5 außerhalb des Funkbereichs FZ der Zentralstelle Z sowie vor allem auch außerhalb der Funkbereiche F1 bis F4 der Datenstellen D1 bis D4. Es gibt somit keine Datenstellen-Kette, welche für die Übertragung der Daten der Datenstelle D5 zur Zentralstelle Z sorgen kann. Um aber eine Übertragung dennoch zu gewährleisten, dient die Brückenstelle B, welche selbst keine eigenen Daten erzeugt. Die Zentralstelle Z wird somit zunächst die Datenstellen D1 und D2 aufrufen, da diese innerhalb des Funkbereichs FZ liegen und immer "mithören", ob sie aufgerufen werden. Da die Brückenstelle B innerhalb des Funkbereiches F2 der Datenstelle D2 liegt und - ebenso wie die anderen Datenstellen - immer in Hörbereitschaft ist, kann die Datenstelle D2 die Brückenstelle B aufrufen. Da schließlich die gewünschte Datenstelle D5 im Funkbereich FB der Brückenstelle B liegt, kann sie aufgerufen werden und ihre Daten über den Weg Brükenstelle B / Datenstelle D2 der Zentralstelle Z übertragen.

### Bezugszeichenliste

- B: Brückenstelle
- D1 bis D5: Datenstellen
- Z: Zentralstelle

- FB: Funkbereich Brückenstelle B
- F1 bis F5: Funkbereiche Datenstellen D1 bis D5
- FZ: Funkbereich Zentralstelle Z

## Patentansprüche

1. Verfahren zum zentralen Erfassen von an örtlich verteilten Datenstellen (D1 bis D5) anliegenden Verbrauchsdaten in Gebäuden, insbesondere für Heizung und Warmwasser
wobei eine Zentralstelle (Z) die Daten von der jeweiligen Datenstelle (D1 bis D5) per Funk abruft und speichert,
**dadurch gekennzeichnet,**
**daß** bei Nichterreichen einer bestimmten Datenstelle (D1 bis D5) durch die Zentralstelle (Z) diese Zentralstelle (Z) eine erreichbare Datenstelle (D1 bis D5) oder eine anderweitige, erreichbare Brückenstelle (B) anfunkt und
**daß** diese erreichbare Datenstelle (D1 bis D5) oder Brückenstelle (B) daraufhin die anfänglich nicht erreichbare Datenstelle (D1 bis D5) unmittelbar oder mittelbar anfunkt und bei Erreichen die Daten per Funk abruft und an die Zentralstelle (Z) weitersendet.

2. Verfahren nach dem vorhergehenden Anspruch,
**dadurch gekennzeichnet,**
**daß** bei erneutem Nichterreichen der anfänglich nicht erreichten Datenstelle (D1 bis D5) von den durch die Zentralstelle (Z) erreichbaren Datenstellen (D1 bis D5) oder Brückenstellen (B) kaskadenartig weitere erreichbare Datenstellen (D1 bis D5) oder Brückenstellen (B) angefunkt werden bis die Verbindung zu der anfänglich nicht erreichten Datenstelle (D1 bis D5) hergestellt ist und
**daß** ausgehend von der anfänglich nicht erreichten Datenstelle (D1 bis D5) die an die Zentralstelle (Z) zu übertragenden Daten auf dem umgekehrten Verbindungsweg von Datenstelle (D1 bis D5)/Brückenstelle (B) zu Datenstelle (D1 bis D5)/Brückenstelle (B) weitergesendet werden.

3. Verfahren nach einem der vorhergehenden Ansprüche,
**dadurch gekennzeichnet,**
**daß** sämtliche erreichbaren Datenstellen (D1 bis D5) oder Brückenstelle (B) der Reihe nach angefunkt werden bis eine Verbindung zu der anfänglich nicht erreichten Datenstelle (D1 bis D5) hergestellt ist.

4. Verfahren nach einem der vorhergehenden Ansprüche,
**dadurch gekennzeichnet,**
**daß** die Daten von der Datenstelle (D1 bis D5) oder Brückenstelle (B) zunächst zwischengespeichert und anschließend weitergesendet werden.

5. Verfahren nach einem der vorhergehenden Ansprüche,
**dadurch gekennzeichnet,**
**daß** unterschiedliche Sendestartzeiten der einzelnen Datenstellen (D1 bis D5) aus einem vorgegebenen Algorithmus und einer Datenstellenidentifikation in jeder Datenstelle (D1 bis D5) für sich berechnet wird.

6. Verfahren nach einem der Ansprüche 1 bis 4,
**dadurch gekennzeichnet,**
**daß** die Zentralstelle (Z) die Daten aus den einzelnen Datenstellen (D1 bis D5) zeitverzögert anfordert.

7. Vorrichtung mit Mittel zur Durchführung der einzelnen Schritte des Verfahrens nach einem der Ansprüche 1 bis 6, mit einer zentralen Sende- und Empfangseinheit der Zentralstelle (Z) mit einer bidirektionalen Sende- und Empfangsschaltung
sowie mit den Datenstellen (D1 bis D5) zugeordneten Sende- und Empfangseinheiten ebenfalls mit bidirektionalen Sende- und Empfangsschaltungen, wobei
die Sende- und Empfangseinheiten der Datenstellen (D1 bis D5) untereinander sende- und empfangsfähig sind.

8. Vorrichtung nach Anspruch 7,
**dadurch gekennzeichnet,**
**daß** zusätzlich zu den Empfangs- und Sendeeinheiten der Datenstellen (D1 bis D5) Brücken-Empfangs/Sendeeinheiten für einen reinen Datentransfer vorgesehen sind.

## Claims

1. Process for central acquisition of consumption data present at spatially distributed data points (D1 to D5) in buildings, in particular for heating and hot water, where a central point (Z) retrieves the data by radio from the data points (D1 to D5) and stores them, **characterised in that** if a particular data point (D1 to D5) cannot be reached by the central point (Z), this central point (Z) radios a reachable data point (D1 to D5) or other reachable bridge point (B), and that this reachable data point (D1 to D5) or bridge point (B) thereupon directly or indirectly radios the data point (D1 to D5) which could not initially be reached and on reaching this retrieves the data by radio and transfers it to the central point (Z).

2. Process according to the previous claim, **characterised in that** if the data point (D1 to D5) not initially reached is again not reached by the data point (D1 to D5) or bridge point (B) which can be reached by the central point (Z), in the manner of a cascade further reachable data points (D1 to D5) or bridge points (B) are radioed until the connection is established to the data point (D1 to D5) not initially reached, and starting from the data point (D1 to D5) not initially reached, the data to be transferred to the central point (Z) is passed along the reverse connection route from data point (D1 to D5) / bridge point (B) to data point (D1 to D5) / bridge point (B).

3. Process according to any of the previous claims, **characterised in that** all reachable data points (D1 to D5) or bridge points (B) are radioed in sequence until a connection is created to the data point (D1 to D5) not initially reached.

4. Process according to any of the previous claims, **characterised in that** the data from the data point (D1 to D5) or bridge point (B) is first stored temporarily and then passed on.

5. Process according to any of the previous claims, **characterised in that** different transmission start times of the individual data points (D1 to D5) are calculated individually in each data point (D1 to D5) from a prespecified algorithm and a data point identification.

6. Process according to any of claims 1 to 4, **characterised in that** the central point (Z) requests the data from the individual data points (D1 to D5) with time delay.

7. Device with means for performance of the individual steps of the process according to any of claims 1 to 6, with a central transmission and reception unit of the central point (Z) with a bidirectional transmission and reception circuit, and with transmission and reception units allocated to the data points (D1 to D5) also with bidirectional transmission and reception circuits, where the transmission and reception units of the data points (D1 to D5) can transmit and receive between themselves.

8. Device according to claim 7, **characterised in that** in addition to the transmission and reception units of the data points (D1 to D5), bridge reception/transmission units are provided for pure data transfer.

## Revendications

1. Procédé de lecture centrale de données de consommation attachées à des sites de données (D1 à D5) localement répartis dans des immeubles, en particulier pour chauffage et eau chaude,
sachant qu'un poste central (Z) récupère les données du site de données respectif (D1 à D5) par radiotransmission, et les mémorise,
**caractérisé en ce que**, si le poste central (Z) ne peut pas atteindre un site de données déterminé (D1 à D5), ce poste central (Z) appelle par radiotransmission un site de données (D1 à D5) pouvant être atteint ou un poste de relais (B) d'un autre type pouvant être atteint,
et **en ce que** ce site de données (D1 à D5) ou poste de relais (B) pouvant être atteint appelle alors directement ou indirectement par radiotransmission le site de données (D1 à D5) qui ne pouvait initialement pas être atteint et, s'il atteint ce site, récupère les données par radiotransmission et les retransmet au poste central (Z).

2. Procédé selon la revendication précédente,
**caractérisé en ce que**, si le site de données (D1 à D5) qui ne pouvait initialement pas être atteint ne peut à nouveau pas être atteint par les sites de données (D1 à D5) ou postes de relais (B) pouvant être atteints, d'autres sites de données (D1 à D5) ou postes de relais (B) pouvant être atteints sont appelés par radiotransmission en cascade, jusqu'à ce que la liaison avec le site de données (D1 à D5) qui ne pouvait initialement pas être atteint soit réalisée,
et **en ce que**, à partir du site de données (D1 à D5) qui ne pouvait initialement pas être atteint, les données à transmettre au poste central (Z) sont retransmises sur le chemin de liaison inverse, d'un site de données (D1 à D5)/poste de relais (B) à l'autre.

3. Procédé selon l'une des revendications précédentes, **caractérisé en ce que** tous les sites de données (D1 à D5) ou postes de relais (B) pouvant être atteints sont appelés dans l'ordre par radiotransmission jusqu'à ce qu'une liaison avec le site de données (D1 à D5) qui ne pouvait initialement pas être atteint soit réalisée.

4. Procédé selon l'une des revendications précédentes, **caractérisé en ce que** les données sont initialement temporairement stockées par le site de données (D1 à D5) ou poste de relais (B), puis retransmises.

5. Procédé selon l'une des revendications précédentes, **caractérisé en ce que** des temps différents de début d'émission des sites de données individuels (D1 à D5) sont calculés individuellement dans chaque site de données (D1 à D5) à partir d'un algorithme prédéfini et d'une identification des sites de données.

6. Procédé selon l'une des revendications 1 à 4, **caractérisé en ce que** le poste central (Z) requiert les données des sites de données individuels (D1 à D5) avec un retard de temps.

7. Dispositif avec des moyens pour la mise en oeuvre des différentes étapes du procédé selon l'une des revendications 1 à 6,
avec une unité émettrice et réceptrice centrale du poste central (Z) dotée d'un circuit émetteur et récepteur bidirectionnel,
et avec des unités émettrices et réceptrices associées aux sites de données (D1 à D5) qui sont elles aussi dotées de circuits émetteurs et récepteurs bidirectionnels,
sachant que les unités émettrices et réceptrices des sites de données (D1 à D5) peuvent émettre et recevoir entre elles.

8. Dispositif selon la revendication 7, **caractérisé en ce que**, en plus des unités émettrices et réceptrices des sites de données (D1 à D5), il est prévu des unités émettrices/réceptrices de relais destinées exclusivement à un transfert de données.
